# EUROPEAN PATENT APPLICATION

(11) **EP 4 787 564 A1**
(43) Date of publication of application: **05.08.2026**
(21) Application number: 24870605.3
(22) Date of filing: 20.09.2024
(51) Int. Cl.: H01M 50/15

(54) **END COVER ASSEMBLY, BATTERY, BATTERY PACK, AND ELECTRICAL SYSTEM**

(30) Priority: 25.09.2023 CN 202322618354 U
(71) Applicant: BYD Company Limited, Shenzhen, Guangdong 518118 (CN)
(72) Inventor: LIU, Xufeng, Shenzhen, Guangdong 518118 (CN); ZHU, Yan, Shenzhen, Guangdong 518118 (CN); DAI, Yangyang, Shenzhen, Guangdong 518118 (CN); ZHOU, Huan, Shenzhen, Guangdong 518118 (CN); ZENG, Lvming, Shenzhen, Guangdong 518118 (CN)
(74) Representative: Mathys & Squire
(86) International application number: PCT/CN2024/120039
(87) International publication number: WO 2025/067061

(57) **Abstract**

An end cover assembly (10), a battery (100), a battery pack (200), and an electrical system (1000). The end cover assembly (10) comprises a cover plate (11), an explosion-proof valve (12), an insulating plate assembly (13), and an adhesive member (17). The cover plate (11) comprises a first surface (111) and a second surface (112) facing away from each other in a thickness direction (Z), and the cover plate (11) is provided with an explosion-proof hole (113) extending through the first surface (111) and the second surface (112). The explosion-proof valve (12) is connected to the cover plate (11), and blocks the explosion-proof hole (113). The insulating plate assembly (13) comprises a third surface (131) and a fourth surface (132) facing away from each other in the thickness direction (Z), the third surface (131) facing the second surface (112). Two opposite surfaces of the adhesive member (17) are connected to the second surface (112) and the third surface (113), respectively. An orthographic projection of the adhesive member (17) onto the cover plate (11) is located in an adhesive region (116) of the second surface (112), and the adhesive member (17) and the adhesive region (116) satisfy the relational expression: 30%≤S_{J1}/S_{J2}≤45%, SJ1 being the area of the the orthographic projection area of the adhesive member (17) onto the cover plate (11), and SJ2 being the area of the adhesive region (116).

## Description

### CROSS-REFERENCE TO RELATED APPLICATIONS

The present disclosure claims priority to Chinese Patent Application No. 202322618354.X filed with the China National Intellectual Property Administration on September 25, 2023, titled "END COVER ASSEMBLY, BATTERY, BATTERY PACK, AND ELECTRICAL SYSTEM", which is incorporated herein by reference in its entirety.

### FIELD

The present disclosure relates to the field of energy storage device technology and, in particular, to an end cover assembly, a battery, a battery pack, and an electrical system.

### BACKGROUND

With the development of science and technology, batteries are increasingly widely used in modern society. At present, common batteries mainly include a housing, a cell assembly, and an end cover assembly. The cell assembly is housed within the housing, and the end cover assembly seals the housing, and the tabs of the cell assembly are connected to the terminal posts on the end cover assembly. Moreover, in order to ensure the safety of the battery, an explosion-proof valve is installed on the end cover assembly, which is configured to explode and release the air in the case of flatulence within the battery.

However, the connection reliability between the components inside the existing end cover assembly is poor, especially the cover plate and the insulating plate which are fixed only by the terminal posts, so how to improve the reliability between the cover plate and the insulating plate has become the key.

### SUMMARY

An object of the present disclosure is to provide an end cover assembly, a battery, a battery pack, and an electrical system that solves the problem of reliability of the connection between a cover plate and an insulating plate.

In order to achieve the purpose of the present disclosure, the present disclosure provides the following technical solutions:

in a first aspect, the present disclosure provides an end cover assembly including a cover plate, an explosion-proof valve, an insulating plate group, and an adhesive member. The cover plate includes a first surface and a second surface opposite to each other in a thickness direction. The cover plate is formed with an explosion-proof hole extending through the first surface and the second surface. The explosion-proof valve is connected to the cover plate and seals the explosion-proof hole. The insulating plate group includes a third surface and a fourth surface opposite to each other in the thickness direction. The third surface is positioned closer to the second surface than the fourth surface. The adhesive member is arranged between the cover plate and the insulating plate group, and two opposite surfaces of the adhesive member are connected to the second surface and the third surface, respectively. The second surface has an adhesive region, the orthographic projection of the adhesive member on the cover plate is located in the adhesive region. The adhesive member and the adhesive region satisfy the relationship: 30% ≤ S_{J1}/S_{J2} ≤ 45%, where S_{J1} is the orthographic projection area of the adhesive member on the cover plate, and S_{J2} is the area of the adhesive region.

In one embodiment, the shortest distance between an edge of the adhesive member and an edge of the explosion-proof valve is 2.5 mm to 12.5 mm.

In one embodiment, the insulating plate group includes a first insulating plate and a second insulating plate arranged opposite to each other in a length direction of the cover plate. The adhesive member includes a first adhesive member and a second adhesive member. The second surface has a first adhesive region and a second adhesive region, the first adhesive member is located in the first adhesive region and the second adhesive member is located in the second adhesive region. The first adhesive member is located between the first insulating plate and the cover plate, the second adhesive member is located between the second insulating plate and the cover plate, and the explosion-proof valve is located between the first adhesive member and the second adhesive member.

In one embodiment, S_{J1} is the sum of the orthographic projected areas of the first adhesive member and the second adhesive member on the cover plate, and S_{J2} is the sum of the areas of the first adhesive region and the second adhesive region; and/or S_{J1} is the orthographic projection area of the first adhesive member on the cover plate, and S_{J2} is the area of the first adhesive region; and/or, S_{J1} is the orthographic projection area of the second adhesive member on the cover plate, and S_{J2} is the area of the second adhesive region.

In one embodiment, in the length direction of the cover plate, the shortest distances from the opposite ends of the cover plate to the explosion-proof hole are the same. A length of the first insulating plate is greater than a length of the second insulating plate.

In one embodiment, the length of the first insulating plate is greater than the length of the second insulating plate, and the first adhesive member and the second adhesive member satisfy the relationship: k > l. Here, k is the shortest distance between an edge of the first adhesive member and the edge of the explosion-proof valve, and l is the shortest distance between an edge of the second adhesive member and the edge of the explosion-proof valve.

In one embodiment, 9mm≤k≤12.5mm, and 2mm≤l≤3.5mm.

In one embodiment, a thickness of the adhesive member in the thickness direction of the cover plate is from 0.01 mm to 0.1 mm.

In one embodiment, the first insulating plate is formed with a first receiving groove on its surface facing the cover plate. The second insulating plate is formed with a second receiving groove on its surface facing the cover plate. The first receiving groove and the second receiving groove constitute the receiving groove.

In one embodiment, a first notch is formed by the first receiving groove extending along the length direction of the cover plate to a surface of the first insulating plate facing the second insulating plate. A second notch is formed by the second receiving groove extending along the length direction of the cover plate to a surface of the second insulating plate facing the first insulating plate.

In one embodiment, the insulating plate group is provided with ventilation holes. The ventilation hole is aligned with the explosion-proof valve. The number of ventilation holes may be plural, and the ventilation holes include a first ventilation hole and a second ventilation hole. The first ventilation hole is formed in the first insulating plate, and the second ventilation hole is formed in the second insulating plate.

In one embodiment, the end cover assembly further includes a terminal post. The terminal posts include a first terminal post and a second terminal post. The first terminal post is mounted through the cover plate and the first insulating plate, and the second terminal post is mounted through the cover plate and the second insulating plate.

In one embodiment, the cover plate is formed with a terminal post hole, and a first liquid injection hole extending through the first surface and the second surface. The terminal post holes include a first terminal post hole and a second terminal post hole. The first terminal post hole and the second terminal post hole are located at two opposite ends of the cover plate in the length direction of the cover plate, respectively.

In one embodiment, when the first terminal post hole is a positive terminal post hole, then the first liquid injection hole is located between the first terminal post hole and the explosion-proof hole. Alternatively, when the second terminal post hole is a positive terminal post hole, then the first liquid injection hole is located between the second terminal post hole and the explosion-proof hole.

In one embodiment, the first adhesive member is located between the explosion-proof hole and the first terminal post hole, and the second adhesive member is located between the explosion-proof hole and the second terminal post hole.

In one embodiment, the first insulating plate is formed with a third terminal post hole at its end away from the second insulating plate, and the second insulating plate is formed with a fourth terminal post hole at its end away from the first insulating plate. A second liquid injection hole is further formed in the first insulating plate or the second insulating plate. The third terminal post hole is aligned with the first terminal post hole, the fourth terminal post hole is aligned with the second terminal post hole, and the second liquid injection hole is aligned with the first liquid injection hole.

In a second aspect, the present disclosure also provides a battery. The battery includes a cell assembly, a housing, and the end cover assembly according to any one of the embodiments of the first aspect. The cell assembly is accommodated within the housing, and the end cover assembly is connected to the housing.

In one embodiment, the end cover assembly seals an opening of the housing, and the end cover assembly is electrically connected to the cell assembly.

In a third aspect, the present disclosure further provides a battery pack. The battery pack includes the battery according to the second aspect.

In a fourth aspect, the present disclosure further provides an electrical system. The electrical system includes either the battery pack according to the third aspect or the battery according to the second aspect.

According to the invention, the insulation effect between the cover plate and the cell assembly is ensured through the insulation plate group, and by arranging the adhesive member between the cover plate and the insulating plate assembly, a secure connection and fixation of the insulating plate assembly to the cover plate is achieved. Besides, it is guaranteed that the relation between the orthographic projection area of the adhesive member on the cover plate and the area of the adhesive region meets the condition that 30% < = S_{J1}/S_{J2} < = 45%, in one aspect, the bonding effect between the insulating plate group and the cover plate is guaranteed, and the strength of connection between the cover plate and the insulating plate group is improved; in another aspect, the bonding cost is reduced, and excessive waste is reduced.

### BRIEF DESCRIPTION OF THE DRAWINGS

In order to more clearly explain the embodiments of the present disclosure or the technical solutions in the prior art, the drawings that need to be used in the description of the embodiments or the prior art will be briefly introduced below, and it is obvious that the drawings in the following description are only some embodiments of the present disclosure, and for a person skilled in the art, other drawings can be obtained from these drawings without making creative efforts.
FIG. 1 is an exploded structural schematic diagram of a battery according to one embodiment.
FIG. 2 is an exploded structural schematic diagram of an end cover assembly according to one embodiment.
FIG. 3 is a top view of an insulating plate group according to one embodiment.
FIG. 4 is a schematic diagram showing the appearance structure of a cover plate connected with adhesive members on its rear side, according to one embodiment.
FIG. 5 is a schematic diagram of a battery pack according to one embodiment.
FIG. 6 is a schematic diagram of an electrical system according to one embodiment.

### Reference Numeral Explanation:

100 - Battery, 10 - End cover assembly, 20 - Cell assembly, 30 - Housing;
200- Battery pack;
1000- Electrical system;
21- Cell, 22- Tab, 22A- Positive tab, 22B- Negative tab;
11- Cover plate, 111- First surface, 112- Second surface, 113- Explosion-proof hole, 114A- First terminal post hole, 114B- Second terminal post hole, 115- First liquid injection hole, 116- Adhesive region, 116A- First adhesive region, 116B- Second adhesive region;
12- Explosion-proof valve;
13- Insulating plate group, 131- Third surface, 132- Fourth surface, 133-Receiving groove, 134- Ventilation hole, 134A- First ventilation hole, 134B- Second ventilation hole, 135- Gap, 136- Second liquid injection hole;
13A- First insulating plate, 131A- Third left surface, 132A- Fourth left surface, 13A1- First opposite end, 13A2- First connection end, 13A3- Third terminal post hole, 13A4- First receiving groove, 13A5- First notch, 13B5- Second notch;
13B- Second insulating plate, 131B- Third right surface, 132B- Fourth right surface, 13B1- Second opposite end, 13B2- Second connection end, 13B3- Fourth terminal post hole, 13B4- Second receiving groove;
14- Terminal post, 14A- First terminal post, 14B- Second terminal post;
17- Adhesive member, 17A- First adhesive member, 17B- Second adhesive member;
X- Length direction, Y- Width direction, Z- Thickness direction.

### DETAILED DESCRIPTION

Hereinafter, the technical solutions in the embodiments of the present disclosure will be clearly and completely described with reference to the drawings in the embodiments of the present disclosure, and it is obvious that the described embodiments are only a part of the embodiments of the present disclosure, but not all the embodiments. Based on the embodiments in the present disclosure, all other embodiments obtained by those skilled in the art without creative work fall within the scope of protection of the present disclosure.

It will be noted that when a component is referred to as "fixed" to another component, it may be directly on the other component or a centered component may also be present. When one component is considered to be "connected" to another component, it can be directly connected to the other component or there may be a centering component at the same time.

Unless otherwise defined, all technical and scientific terms used herein have the same meanings as commonly understood by a person skilled in the art belonging to this application. The terminology used in the specification herein is for the purpose of describing specific embodiments only, and is not intended to limit the present disclosure. As used herein, the term "and/or" includes any and all combinations of one or more related listed items.

Some embodiments of the present disclosure will be described in detail below with reference to the accompanying drawings. The following embodiments and features in the embodiments may be combined with each other without conflict.

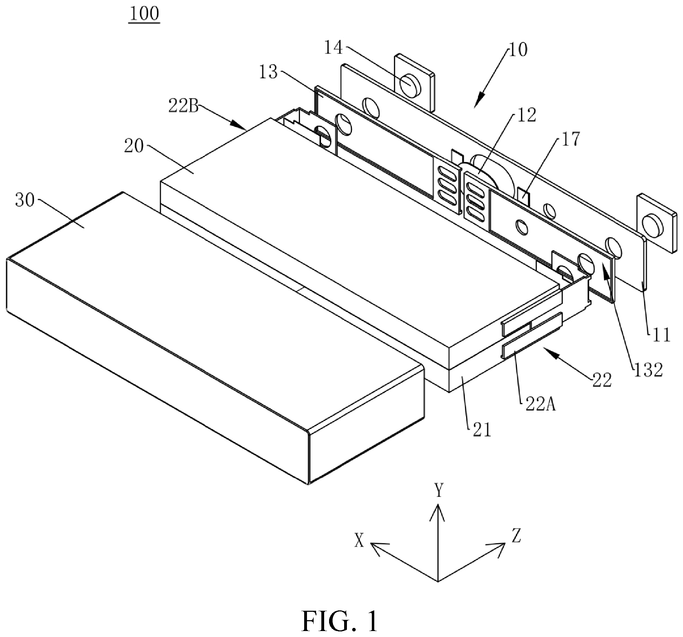

The present disclosure provides a battery 100. Referring to FIG. 1, the battery 100 includes a housing 30, a cell assembly 20, and an end cover assembly 10. The cell assembly 20 is arranged in the housing 30, and the end cover assembly 10 is connected to the housing 30, and the end cover assembly 10 seals an opening of the housing 30, and the end cover assembly 10 is also electrically connected to the cell assembly 20.

In one embodiment, the shape of the battery 100 may be a cuboid. The battery 100 includes a length direction, a width direction, and a height direction (thickness direction). The direction in which the cell assembly 20 is placed into the housing 30 from the opening of the housing 30 is the height direction of the battery 100, the long side of the opening of the housing 30 is the length direction, and the short side of the opening of the housing 30 is the width direction.

Referring to FIG. 1, the cell assembly 20 includes cells 21 and tabs 22. The shape of cells 21 may be a cuboid, and the number of cells 21 may be two. The two cells 21 are stacked in the width direction Y and accommodated in the housing 30. The tabs 22 include a positive tab 22A and a negative tab 22B, and the positive tab 22A and the negative tab 22B are arranged at two opposite ends of each cell 21 in the length direction X, respectively. The cell 21 is formed by successively stacking a positive electrode sheet, a separator, and a negative electrode sheet.

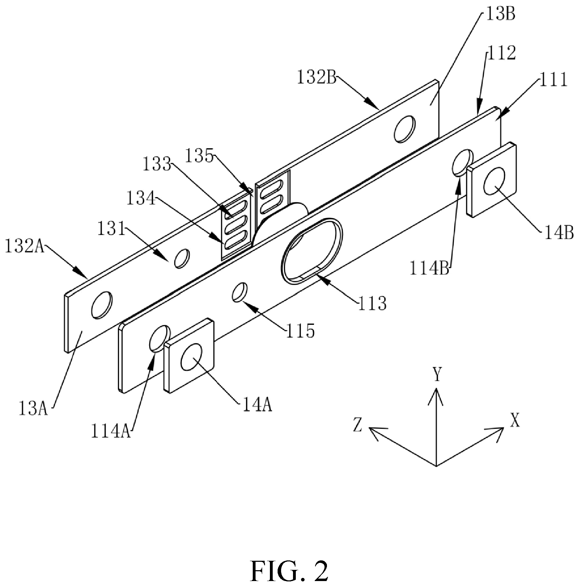

In one embodiment, referring to FIGS. 1 and 2, the end cover assembly 10 includes a cover plate 11, an explosion-proof valve 12, an insulating plate group 13, a terminal post 14, and an adhesive member 17.

The cover plate 11 may have a flat plate structure, the length direction X of the cover plate 11 may be the length direction X of the battery 100, the width direction Y of the cover plate 11 may be the width direction Y of the battery 100, and the thickness direction Z of the cover plate 11 may be the height direction of the battery 100. It is to be noted that the length direction X, the width direction Y, and the thickness direction Z described below are all referred to as the cover plate 11.

Referring to FIGS. 1 and 2, the cover plate 11 includes a first surface 111 and a second surface 112 opposite to each other in a thickness direction Z, the first surface 111 faces the exterior, and the second surface 112 faces the cell assembly 20. The cover plate 11 is formed with an explosion-proof hole 113, a terminal post hole, and a first liquid injection hole 115 extending through the first surface 111 and the second surface 112.

Preferably, the explosion-proof hole 113 is located at a central portion of the cover plate 11, and the shape of the explosion-proof hole 113 may be elliptical. In the length direction X of the cover plate 11, the shortest distances from the two opposite ends of the cover plate 11 to the explosion-proof hole are the same.

The number of terminal post holes may be two, referring to FIG. 2, the terminal post holes are respectively a first terminal post hole 114A and a second terminal post hole 114B. The first terminal post hole 114A and the second terminal post hole 114B are located at two opposite ends of the cover plate 11 in the length direction X, respectively. The terminal post holes are circular in shape. In one embodiment, the first terminal post hole 114A may be a positive terminal post hole and the second terminal post hole 114B may be a negative terminal post hole; alternatively, the first terminal post hole 114A may be a negative terminal post hole and the second terminal post hole 114B may be a positive terminal post hole.

Referring to FIG. 2, the shape of the first liquid injection hole 115 may be circular. In one embodiment, the first liquid injection hole 115 may be located between the first terminal post hole 114A and the explosion-proof hole 113; alternatively, the first liquid injection hole 115 may be located between the second terminal post hole 114B and the explosion-proof hole 113. It will be understood that the first liquid injection hole 115 needs to be located between the positive terminal post hole and the explosion-proof hole 113.

The explosion-proof valve 12 is connected to the cover plate 11 and seals the explosion-proof hole 113. In one embodiment, the explosion-proof valve 12 is connected to the second surface 112, and the connection method includes, but is not limited to, glue bonding, welding, or snap bonding. Since the explosion-proof valve 12 may also be arranged in the explosion-proof hole 113, the outer periphery of the explosion-proof valve 12 is connected to the inner wall of the explosion-proof hole 113.

In one embodiment, a depression may be formed on the explosion-proof valve 12. The thickness of the explosion-proof valve 12 at the depression may be less than the thickness at portions without the depression. The purpose of providing the depression is to allow the explosion-proof valve 12 to burst more easily when the internal pressure of the battery 100 increases. Accordingly, the shape and dimensions of the depression are not specifically limited.

Referring to FIG. 2, the insulating plate group 13 includes a third surface 131 and a fourth surface 132 opposite to each other in the thickness direction Z thereof. The third surface 131 faces and connects to the second surface 112. The third surface 131 is formed with a receiving groove 133. The orthographic projection of the explosion-proof valve 12 on the insulating plate group 13 is located in the receiving groove 133. The bottom wall of the receiving groove 133 is formed with a ventilation hole 134 extending through to the fourth surface 132.

In one embodiment, the insulating plate group 13 may have a flat plate structure, and the length and width of the insulating plate group 13 may be the same as or slightly smaller than the cover plate 11. The insulating plate group 13 is located between the cell assembly 20 and the cover plate 11 for isolating the cover plate 11 and the cell assembly 20. The insulating plate group 13 may be made of an insulating material such as plastic.

Referring to FIGS. 1 to 4, the adhesive member 17 is arranged between the cover plate 11 and the insulating plate group 13, and the two opposite surfaces of the adhesive member 17 are connected to the cover plate 11 and the insulating plate group 13, respectively.

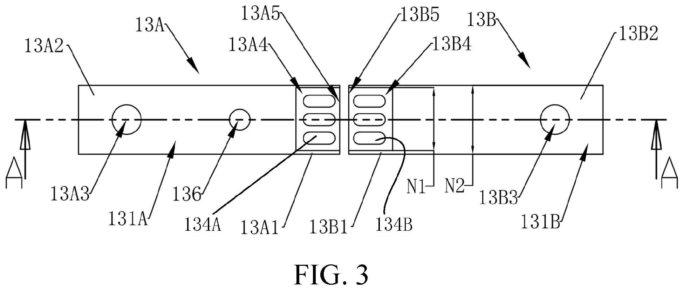

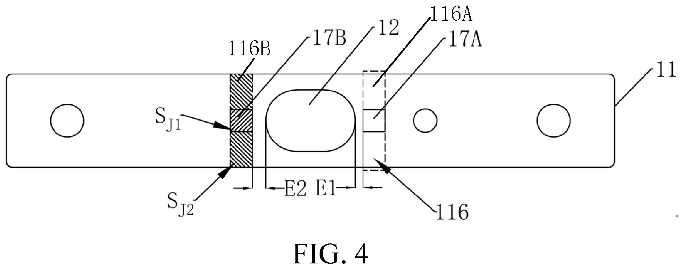

In one embodiment, referring to FIGS. 3 and 4, the second surface 112 has an adhesive region 116 (within the dotted box of FIG. 4), and the adhesive member 17 and the adhesive region 116 satisfy the relationship: 30% ≤ S_{J1}/S_{J2} ≤ 45%, where S_{J1} is the orthographic projection area of the adhesive member 17 on the insulating plate group 13, and S_{J2} is the area of the adhesive region 116.

Specifically, the adhesive region 116 is shown in FIG. 4. A maximum dimension of the adhesive member 17 in a length direction of the cover plate has two endpoints, (that is, the maximum dimension in the outer periphery of the adhesive member 17 parallel to the length direction of the cover plate). From each of the two endpoints, a horizontal line is drawn along the width direction of the cover plate, and each said horizontal line intersects both length edges of the cover plate. The horizontal lines pass through the two endpoints in the width direction of the cover plate respectively, and the horizontal lines intersect the two edges of the cover plate in the length direction thereof. The adhesive region is a region formed by surrounding the horizontal lines passing through the endpoints and the two edges of the cover plate in the length direction. The width of the adhesive region 116 is the width of the cover plate 11, and the length of the adhesive region 116 is the length of the adhesive member 17 in the length direction X of the cover plate 11. The adhesive members 17 are all located within the adhesive region 116. Therefore, when the length of the adhesive region 116 and the length of the adhesive member 17 are the same, the above-described relational expression actually expresses the ratio of the width of the adhesive member 17 to the width of the cover plate 11 in the width direction.

In one embodiment, S_{J1}/S_{J2} may be, but is not limited to, 30%, 32%, 34%, 36%, 38%, 40%, 42%, 44%, or 45%. When S_{J1}/S_{J2} is smaller than the above range, it means that the size of the adhesive member 17 is too small, and the adhesive effect of the adhesive member 17 to the cover plate 11 and the insulating plate group 13 is poor, and when the adhesive is not secure, the insulating plate group 13 moves relative to the cover plate 11. When S_{J1}/S_{J2} is greater than the above range, it means that the size of the adhesive member 17 is too large, which not only wastes materials, but also blocks the lateral air flow between the cover plate 11 and the insulating plate group 13, which is not conducive to air flow.

On the basis of satisfying the above advantages, the strength of the insulating plate group 13 being bonded to the cover plate 11 by the adhesive member 17 is improved. When the adhesive member is not provided, the insulating plate group 13 is only sleeved on the terminal post 14 by the connecting end, and is fixed by the connection between the lead-out member and the terminal post 14. When the opposite end of the insulating plate group 13 moves, it is easy to move in the vertical or horizontal direction to expose the welding region of the explosion-proof valve 12, so it is necessary to fix the opposite end by arranging the adhesive member.

The strength of the connection between the cover plate 11 and the insulating plate group 13 is improved by providing the adhesive member 17. When the adhesive member is not provided, the insulating plate group 13 is connected and fixed to the cover plate 11 only by the terminal post 14, so that the first insulating plate 13A and the second insulating plate 13B rotate relatively around the terminal post 14, respectively. Such rotation not only exposes the welding region of the explosion-proof valve 12, but also misaligns the receiving groove 133 from the explosion-proof valve 12. As a result, when the internal pressure of the battery 100 increases, the explosion-proof valve 12 may fail to burst as intended.

In one embodiment, the shortest distance between the edge of the adhesive member 17 and the edge of the explosion-proof valve 12 is 2.5 mm to 12.5 mm.

Specifically, according to the above embodiment, the shortest distance between the edge of the adhesive member 17 and the edge of the explosion-proof valve 12 should be the shortest distance from the edge of the adhesive member 17 to the arc edge of the explosion-proof valve 12.

In one embodiment, the shortest distance between the edge of the adhesive member 17 and the edge of the explosion-proof valve 12 is 2.5 mm, 3.5 mm, 4.5 mm, 5.5 mm, 6.5 mm, 7.5 mm, 8.5 mm, 9.5 mm, 10.5 mm, 11.5 mm, or 12.5 mm. When the distance is less than the above range, it means that the distance between the adhesive member 17 and the explosion-proof valve 12 is too close, the process accuracy is increased, and the adhesive member 17 is easily connected to the explosion-proof valve 12 when the adhesive member 17 is offset, thereby affecting the explosion-proof valve 12 to burst. When the distance is greater than the above range, it means that the distance between the adhesive member 17 and the explosion-proof valve 12 is too large, leading to an excessively large unfixed portion of the opposite end of the insulating plate group 13, which is then susceptible to offset.

In one embodiment, referring to FIG. 2, the insulating plate group 13 includes a first insulating plate 13A and a second insulating plate 13B arranged opposite to each other in the length direction X of the cover plate 11. The first insulating plate 13A and the second insulating plate 13B collectively enclose the receiving groove 133, and a gap 135 is arranged between the first insulating plate 13A and the second insulating plate 13B. It will be understood that the first insulating plate 13A and the second insulating plate 13B may be two independent insulating plate members, so the gap 135 between the first insulating plate 13A and the second insulating plate 13B is the separation distance between the two. The lengths of the first insulating plate 13A and the second insulating plate 13B may be the same or different.

In one embodiment, the first insulating plate 13A may be a positive electrode insulating plate, and the second insulating plate 13B may be a negative electrode insulating plate. Of course, in another embodiment, the first insulating plate 13A may be a negative electrode insulating plate, and the second insulating plate 13B may be a positive electrode insulating plate. It will be understood that the positive electrode insulating plate may be configured to connect the positive electrode of the cell assembly 20, and the negative electrode insulating plate may be configured to connect the negative electrode of the cell assembly 20. Therefore, the first insulating plate 13A and the second insulating plate 13B are not specifically limited.

In one embodiment, the adhesive member 17 includes a first adhesive member 17A and a second adhesive member 17B, the first adhesive member 17A connects the cover plate 11 and the first insulating plate 13A, and the second adhesive member 17B connects the cover plate 11 and the second insulating plate 13B.

In one embodiment, the first adhesive member 17A is located between the explosion-proof hole 113 and the first terminal post hole 114A, and the second adhesive member 17B is located between the explosion-proof hole 113 and the second terminal post hole 114B.

In one embodiment, the projection of the adhesive member 17 on the insulating plate group 13 is quadrangular. Preferably, the projection of the adhesive member 17 on the insulating plate group 13 is square.

In one embodiment, the second surface 112 has a first adhesive region 116A and a second adhesive region 116B, the first adhesive member 17A is located in the first adhesive region 116A and the second adhesive member 17B is located in the second adhesive region 116B.

In one embodiment, S_{J1} is the sum of the orthographic projected areas of the first adhesive member 17A and the second adhesive member 17B on the cover plate 11, and S_{J2} is the sum of the areas of the first adhesive region 116A and the second adhesive region 116B.

In one embodiment, S_{J1} is an orthographic projection area of the first adhesive 17A on the cover plate 11, and S_{J2} is an area of the first adhesive region 116A.

In one embodiment, S_{J1} is an orthographic projection area of the second adhesive 17B on the cover plate 11, and S_{J2} is an area of the second adhesive region 116B.

In one embodiment, S_{J1} is an orthographic projection area of the first adhesive member 17A on the cover plate 11, and S_{J2} is an area of the first adhesive region 116A. S_{J1} is also an orthographic projection area of the second adhesive member 17B on the cover plate 11, and S_{J2} is also an area of the second adhesive region 116B. That is, the area ratio between the first adhesive member and the first adhesive region 116A and the area ratio between the second adhesive member and the second adhesive region 116B both satisfy the above ranges, and further, the adhesion reliability between the first insulating plate and the second insulating plate is improved.

In one embodiment, referring to FIG. 4, the length of the first insulating plate 13A is greater than the length of the second insulating plate 13B, and the first adhesive member 17A and the second adhesive member 17B satisfy the relationship: k > l. Here, k is E1, which is the shortest distance between the edge of the first adhesive member 17A and the edge of the explosion-proof valve 12, and l is E2, which is the shortest distance between the edge of the second adhesive member 17B and the edge of the explosion-proof valve 12.

Further, k and l satisfy the following relationships: 9 mm ≦ k ≦ 12. 5 mm, and 2 mm ≦ 1 ≦ 3.5 mm.

Specifically, as shown in FIGS. 3 and 4, when the lengths of the first insulating plate 13A and the second insulating plate 13B are different, and the length of the first insulating plate 13A is greater than the length of the second insulating plate 13B, it will be easily understood that the length of the first receiving groove 13A4 is greater than the length of the second receiving groove 13B4. Therefore, when the shortest distance between the edge of the first adhesive member 17A and the edge of the explosion-proof valve 12 is the same as the shortest distance between the edge of the second adhesive member 17B and the edge of the explosion-proof valve 12, in the length direction X, the farther the first adhesive member 17A is from the edge of the first insulating plate 13A close to the second insulating plate 13B , the closer the second adhesive member 17B is from the edge of the second insulating plate 13B close to the first insulating plate 13A. However, this phenomenon leads to an excessively large unfixed portion of the first opposite end 13A1, which is then susceptible to offset.

Therefore, when the lengths of the first insulating plate 13A and the second insulating plate 13B are different, the shortest distance between the edge of the first adhesive member 17A and the edge of the explosion-proof valve 12, and the shortest distance between the edge of the second adhesive member 17B and the edge of the explosion-proof valve 12 can be appropriately adjusted so that unfixed portions of the opposite end are not excessive. That is, the first adhesive member 17A is adjusted close to the edge of the first insulating plate 13A close to the second insulating plate 13B.

When the above-described relationship is not satisfied, the first adhesive member 17A is far away from the edge of the first insulating plate 13A close to the second insulating plate 13B, and unfixed portions of the first opposite end 13A1 are too excessive, which is then susceptible to offset.

It will be understood that when the length of the first insulating plate 13A is smaller than the length of the second insulating plate 13B, it may be 9 mm ≤ 1 ≤ 12.5 mm, and 2 mm ≤ k ≤ 3.5 mm.

In one embodiment, the thickness of the adhesive member 17 in the thickness direction Z of the cover plate 11 is from 0.01 mm to 0.1 mm.

Specifically, since the adhesive member 17 is located between the cover plate 11 and the insulating plate group 13, the thickness of the end cover assembly 10 may depend on the sum of the thicknesses of the cover plate 11, the adhesive member 17, and the insulating plate group 13. When the thicknesses of the cover plate 11 and the insulating plate group 13 are fixed, the thickness of the end cover assembly 10 may be adjusted (e.g., reduced) by controlling the thickness of the adhesive member 17.

In one embodiment, the thickness of the adhesive member 17 is 0.01 mm, 0.02 mm, 0.03 mm, 0.04 mm, 0.05 mm, 0.06 mm, 0.07 mm, 0.08 mm, 0.09 mm, or 0.1 mm. When the thickness is less than the above range, the adhesive member 17 is too thin, raising the required manufacturing process difficulty, and since the adhesive member 17 is double-sided, the adhesive member 17 is too thin to affect the adhesive performance thereof. When the adhesive member 17 is greater than the above range, the adhesive member 17 is too thick, which is not conducive to reducing the thickness of the end cover assembly 10.

In one embodiment, the thickness of the first insulating plate 13A and the second insulating plate 13B is the same. Referring to FIGS. 2 and 3, it will be understood that the first insulating plate 13A has a third left surface 131A and a fourth left surface 132A opposite to each other, and the second insulating plate 13B has a third right surface 131B and a fourth right surface 132B opposite to each other. The third left surface 131A and the third right surface 131B constitute the third surface 131, and the fourth left surface 132A and the fourth right surface 132B constitute the fourth surface 132. Both the first insulating plate 13A and the second insulating plate 13B are arranged with ventilation holes 134. The number of ventilation holes 134 is plural, and the ventilation holes 134 include a first ventilation hole 134A and a second ventilation hole 134B. The first ventilation hole 134A is formed in the first insulating plate 13A, and the second ventilation hole 134B is formed in the second insulating plate 13B.

In one embodiment, referring to FIG. 3, the first insulating plate 13A further includes a first opposite end 13A1 and a first connection end 13A2, and the second insulating plate 13B further includes a second opposite end 13B1 and a second connection end 13B2. The first opposite end 13A1 and the first connection end 13A2 are located at the two opposite ends of the first insulating plate 13A in the length direction X, and the second opposite end 13B1 and the second connection end 13B2 are located at the two opposite ends of the second insulating plate 13B in the length direction X. The first opposite end 13A1 and the second opposing end 13B1 are close to each other. The first opposite end 13A1 and the second opposite end 13B1 collectively enclose the receiving groove 133.

Further, referring to FIG. 3, the first insulating plate 13A is further formed with a third terminal post hole 13A3 at its end (first connection end 13A2) away from the second insulating plate 13B, the second insulating plate 13B is further formed with a fourth terminal post hole 13B3 at its end (second connection end 13B2) away from the first insulating plate 13A. A second liquid injection hole 136 is further formed in the first insulating plate 13A or the second insulating plate 13B. The third terminal post hole 13A3 is aligned with the first terminal post hole 114A, the fourth terminal post hole 13B3 is aligned with the second terminal post hole 114B, and the second liquid injection hole 136 is aligned with the first liquid injection hole 115.

Referring to FIG. 2, the terminal post 14 includes a first terminal post 14A and a second terminal post 14B, and the structures of the first terminal post 14A and the second terminal post 14B are substantially the same. The terminal post 14 is mounted through the cover plate 11 and the insulating plate group 13. The first terminal post 14A is mounted through the cover plate 11 and the first insulating plate 13A, and the second terminal post 14B is mounted through the cover plate 11 and the second insulating plate 13B.

In one embodiment, the first terminal post 14A may be a positive terminal post 14, and the second terminal post 14B may be a negative terminal post 14. Of course, in other embodiment, the first terminal post 14A may be a negative terminal post 14, and the second terminal post 14B may be a positive terminal post 14.

It will be understood that the first terminal post 14A should pass through the first terminal post hole 114A and the third terminal post hole 13A3, and the second terminal post 14B should pass through the second terminal post hole 114B and the fourth terminal post hole 13B3.

In one embodiment, referring to FIGS. 3 and 4, the first insulating plate 13A is formed with a first receiving groove 13A4 on its surface facing the cover plate 11, and a first notch 13A5 is formed by the first receiving groove 13A4 extending along the length direction X of the cover plate 11 to the surface of the first insulating plate 13A facing the second insulating plate 13B. The second insulating plate 13B is formed with a second receiving groove 13B4 on its surface facing the cover plate 11, and a second notch 13B5 is formed by the second receiving groove 13B4 extending along the length direction X of the cover plate 11 to the surface of the second insulating plate 13B facing the first insulating plate 13A. The first receiving groove 13A4 and the second receiving groove 13B4 constitute the receiving groove 133.

Specifically, according to the above embodiment, the receiving groove 133 may include a first receiving groove 13A4 and a second receiving groove 13B4, the first receiving groove 13A4 is located on the first opposite end 13A1, the second receiving groove 13B4 is located on the second opposite end 13B1, and the gap 135 is located between the first receiving groove 13A4 and the second receiving groove 13B4.

The third left surface 131A is formed with a first receiving groove 13A4, and a first notch 13A5 is formed by the first receiving groove 13A4 extending along the length direction X to the surface of the first insulating plate 13A facing the second insulating plate 13B. The third right surface 131B is formed with a second receiving groove 13B4, and a second notch 13B5 is formed by the second receiving groove 13B4 extending along the length direction X to the surface of the second insulating plate 13B facing the first insulating plate 13A. The bottom walls of the first receiving groove 13A4 and the second receiving groove 13B4 are mutually unobstructed.

By providing the first receiving groove 13A4 that extends to form the first notch 13A5 on one side of the first insulating plate 13A, and the second receiving groove 13B4 that extends to form the second notch 13B5 on one side of the second insulating plate 13B, the bottom walls of the first receiving groove 13A4 and the second receiving groove 13B4 are mutually unobstructed. After the explosion-proof valve 12 is accommodated in the receiving groove 133, a gap is maintained between the explosion-proof valve 12 and the bottom wall of the receiving groove 133, thereby forming a pressure relief chamber. Consequently, when the internal pressure of the battery 100 increases, this pressure relief chamber allows the pressure to increase sufficiently to burst the explosion-proof valve 12.

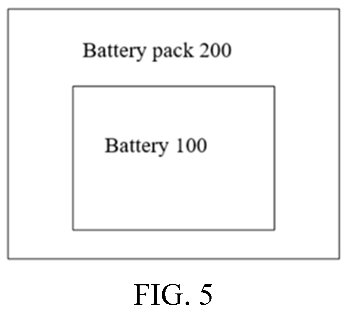

In one embodiment, referring to FIG. 5, the present disclosure further provides a battery pack 200, and the battery pack 200 includes the battery 100 in the above embodiment.

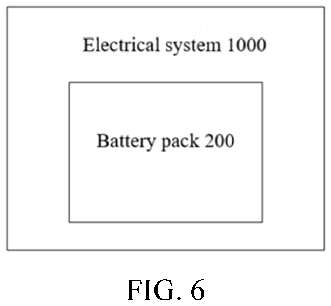

In one embodiment, referring to FIG. 6, the present disclosure further provides a electrical system 1000, and the electrical system 1000 includes the battery pack 200 in the above embodiment. In one embodiment, the electrical system 1000 may be a vehicle or an energy storage power station.

In the description of the embodiments of the present disclosure, it will be noted that the orientation or positional relationship of indicators such as "center", "upper", "lower", "left", "right", "vertical", "horizontal", "inner", and "outer" is based on the drawings, and is only for the convenience and simplification of the description of the present disclosure, and does not indicate or imply that the referred device or element must have a specific orientation, be constructed and operated in a specific orientation, and therefore will not be understood as a limitation of the present disclosure.

The above disclosure is only one preferred embodiment of the present disclosure, and of course, it is not necessary to limit the scope of the present disclosure. A person skilled in the art can understand that all or part of the process of implementing the above embodiments and make equivalent changes according to the claims of the present disclosure still belong to the scope of the present disclosure.

## Claims

1. An end cover assembly (10), comprising:
a cover plate (11), comprising a first surface (111) and a second surface (112) opposite to each other in a thickness direction (Z), the cover plate (11) being disposed with an explosion-proof hole (113) extending through the first surface (111) and the second surface (112);
an explosion-proof valve (12), connected to the cover plate (11) and sealing the explosion-proof hole (113);
an insulating plate group (13), comprising a third surface (131) and a fourth surface (132) opposite to each other in the thickness direction (Z), the third surface (131) being positioned closer to the second surface (112) than the fourth surface (132); and
an adhesive member (17), arranged between the cover plate (11) and the insulating plate group (13), and two opposite surfaces of the adhesive member (17) being connected to the second surface (112) and the third surface (131), respectively; the second surface (112) having an adhesive region (116), an orthographic projection of the adhesive member (17) on the cover plate (11) being located in the adhesive region (116), and the adhesive member (17) and the adhesive region (116) satisfying the relationship: 30% ≤ S_{J1}/S_{J2} ≤ 45%, wherein S_{J1} being an orthographic projection area of the adhesive member (17) on the cover plate (11), and S_{J2} being an area of the adhesive region (116).

2. The end cover assembly (10) according to claim 1, wherein the shortest distance between an edge of the adhesive member (17) and an edge of the explosion-proof valve (12) is 2.5 mm to 12.5 mm.

3. The end cover assembly (10) according to claim 1 or 2, wherein the insulating plate group (13) comprises a first insulating plate (13A) and a second insulating plate (13B) arranged opposite to each other in a length direction of the cover plate (11), the adhesive member (17) comprises a first adhesive member (17A) and a second adhesive member (17B), the second surface (112) has a first adhesive region (116A) and a second adhesive region (116B), the first adhesive member (17A) is located in the first adhesive region (116A), the second adhesive member (17B) is located in the second adhesive region (116B), the first adhesive member (17A) is located between the first insulating plate (13A) and the cover plate (11), the second adhesive member (17B) is located between the second insulating plate (13B) and the cover plate (11), and the explosion-proof valve (12) is located between the first adhesive member (17A) and the second adhesive member (17B).

4. The end cover assembly (10) according to claim 3, wherein S_{J1} is a sum of orthographic projected areas of the first adhesive member (17A) and the second adhesive member (17B) on the cover plate (11), and S_{J2} is a sum of areas of the first adhesive region (116A) and the second adhesive region (116B); and/or
S_{J1} is an orthographic projection area of the first adhesive member (17A) on the cover plate (11), and S_{J2} is an area of the first adhesive region (116A); and/or
S_{J1} is an orthographic projection area of the second adhesive member (17B) on the cover plate (11), and S_{J2} is an area of the second adhesive region (116B).

5. The end cover assembly (10) according to claim 3 or 4, wherein in the length direction of the cover plate (11), the shortest distances from two opposite ends of the cover plate (11) to the explosion-proof hole (113) are the same, and a length of the first insulating plate (13A) is greater than a length of the second insulating plate (13B).

6. The end cover assembly (10) according to any one of claims 3 to 5, wherein the first adhesive member (17A) and the second adhesive member (17B) satisfy the relationship: k > l, wherein k is the shortest distance between an edge of the first adhesive member (17A) and the edge of the explosion-proof valve (12), and l is the shortest distance between an edge of the second adhesive member (17B) and the edge of the explosion-proof valve (12).

7. The end cover assembly (10) according to claim 6, wherein 9 mm ≤ k ≤ 12.5 mm, and 2 mm ≤ l ≤ 3.5 mm.

8. The end cover assembly (10) according to any one of claims 1 to 7, wherein a thickness of the adhesive member (17) in the thickness direction (Z) of the cover plate (11) is from 0.01 mm to 0.1 mm.

9. The end cover assembly (10) according to any one of claims 3 to 6, wherein the first insulating plate (13A) is disposed with a first receiving groove (13A4) on the surface facing the cover plate (11); the second insulating plate (13B) is disposed with a second receiving groove (13B4) on the surface facing the cover plate (11), and the first receiving groove (13A4) and the second receiving groove (13B4) constitute a receiving groove (133).

10. The end cover assembly (10) according to claim 9, wherein a first notch (13A5) is formed by the first receiving groove (13A4) extending along a length direction (X) of the cover plate (11) to a surface of the first insulating plate (13A) facing the second insulating plate (13B); and a second notch (13B5) is formed by the second receiving groove (13B4) extending along the length direction (X) of the cover plate (11) to a surface of the second insulating plate (13B) facing the first insulating plate (13A).

11. The end cover assembly (10) according to any one of claims 3 to 6, wherein the insulating plate group (13) is provided with a ventilation hole (134), the ventilation hole (134) is aligned with the explosion-proof valve (12), a number of ventilation holes (134) is plural, and the ventilation holes (134) include a first ventilation hole (134A) and a second ventilation hole (134B), the first ventilation hole (134A) is disposed in the first insulating plate (13A), and the second ventilation hole (134B) is disposed in the second insulating plate (13B).

12. The end cover assembly (10) according to any one of claims 3 to 11, the end cover assembly (10) further comprises a terminal post (14), the terminal posts (14) comprise a first terminal post (14A) and a second terminal post (14B), the first terminal post (14A) is mounted through the cover plate (11) and the first insulating plate (13A), and the second terminal post (14B) is mounted through the cover plate (11) and the second insulating plate (13B).

13. The end cover assembly (10) according to any one of claims 3 to 7, and 9 to 12, the cover plate (11) is further formed with a terminal post hole, and a first liquid injection hole (115) extending through the first surface (111) and the second surface (112); the terminal post holes comprise a first terminal post hole (114A) and a second terminal post hole (114B), the first terminal post hole (114A) and the second terminal post hole (114B) are located at two opposite ends of the cover plate (11) in the length direction (X) of the cover plate (11), respectively.

14. The end cover assembly (10) according to claim 13, wherein when the first terminal post hole (114A) is a positive terminal post hole, the first liquid injection hole (115) is located between the first terminal post hole (114A) and the explosion-proof hole (113); or
when the second terminal post hole (114B) is a positive terminal post hole, the first liquid injection hole (115) is located between the second terminal post hole (114B) and the explosion-proof hole (113).

15. The end cover assembly (10) according to claim 13 or 14, wherein the first adhesive member (17A) is located between the explosion-proof hole (113) and the first terminal post hole (114A), and the second adhesive member (17B) is located between the explosion-proof hole (113) and the second terminal post hole (114B).

16. The end cover assembly (10) according to any one of claims 13 to 15, wherein the first insulating plate (13A) is formed with a third terminal post hole (13A3) at the end away from the second insulating plate (13B), and the second insulating plate (13B) is formed with a fourth terminal post hole (13B3) at the end away from the first insulating plate (13A); a second liquid injection hole (136) is further formed in the first insulating plate (13A) or the second insulating plate (13B); the third terminal post hole (13A3) is aligned with the first terminal post hole (114A), the fourth terminal post hole (13B3) is aligned with the second terminal post hole (114B), and the second liquid injection hole (136) is aligned with the first liquid injection hole (115).

17. A battery (100), comprising the end cover assembly (10) according to any one of claims 1 to 16, a cell assembly (20) and a housing (30), the cell assembly (20) being accommodated within the housing (30), and the end cover assembly (10) being connected to the housing (30).

18. The battery (100) according to claim 17, wherein the end cover assembly (10) seals an opening of the housing (30), and the end cover assembly (10) is electrically connected to the cell assembly (20).

19. A battery pack (200), comprising the battery (100) according to claim 18.

20. An electrical system (1000), comprising the battery pack (200) according to claim 19 or the battery (100) according to claim 17.
